# EUROPÄISCHE PATENTANMELDUNG

(11) **EP 1 167 845 A2**
(43) Veröffentlichungstag der Anmeldung: **02.01.2002**
(21) Anmeldenummer: 01108426.6
(22) Anmeldetag: 04.04.2001
(51) Int. Cl.: F16K 17/04, F02M 37/00

(54) **Ventil für eine Kraftstoffördereinheit**

(30) Priorität: 21.06.2000 DE 10030609
(71) Anmelder: Mannesmann VDO AG, 60388 Frankfurt am Main (DE)
(72) Erfinder: Marx, Peter, 38553 Wasbüttel (DE); Möller, Wilfried, 36251 Ludwigsau (DE); Schaffert, Jürgen, 36251 Bad Hersfeld (DE); Deichmann, Johannes, 36211 Alheim (DE); Deubner, Jörg, 36179 Bebra (DE)
(74) Vertreter: Rassler, Andrea, Dipl.-Phys.

(57) **Zusammenfassung**

Ein Ventil für eine Kraftstoffördereinheit hat einen in einem Gehäuse (3) eingepreßten Gegenhalter (7). An dem Gegenhalter (7) stützt sich ein zur Vorspannung eines Schließteils (5) gegen einen Ventilsitz gestaltetes Schließteil (5) ab. Das erfindungsgemäße Ventil läßt sich besonders einfach montieren.

## Beschreibung

Die Erfindung betrifft ein Ventil, insbesondere ein Druckbegrenzungsventil für eine Kraftstoffördereinheit mit einem Gehäuse, mit einem in dem Gehäuse angeordneten, gegen einen Ventilsitz bewegbaren Schließteil und mit einer sich an einem mit dem Gehäuse verbundenen Gegenhalter abstützenden Feder zur Vorspannung des Schließteils. Weiterhin betrifft die Erfindung ein Ventil, insbesondere ein Entlüftungsventil für eine Kraftstoffördereinheit mit einem Gehäuse, mit einem gegen einen Ventilsitz bewegbaren Schließteil und mit einer Feder zur Vorspannung des Schließteils, wobei die Feder kleinere Abmessungen hat als das Schließteil.

Solche Ventile werden in heutigen Kraftstoffördereinheiten häufig als Druckbegrenzungsventil oder als Entlüftungsventil eingesetzt und sind aus der Praxis bekannt. Die Gehäuse der Ventile sind als topfförmige Verformungen in einem die Fördereinheit abschließenden Gehäuseteil gestaltet. Bei dem bekannten Druckbegrenzungsventil ist das Gehäuse rohrförmig zur Aufnahme des als Kugel ausgebildeten Schließteils und der Feder gestaltet. Nach der Montage des Schließteils und der Kugel wird das Gehäuse von dem als Kappe ausgebildeten Gegenlager verschlossen. Das Gegenlager hat Schlitze zur Durchströmung von durchgelassenem Kraftstoff, Zentrierelemente für die Feder und Rastelemente zur Verhakung mit dem Gehäuse. Bei dem als Entlüftungsventil bekannten Ventil befindet sich ausschließlich die Feder innerhalb des Gehäuses. Der Ventilsitz ist an der Außenseite des dem Gegenhalter gegenüberliegenden Endes des Gehäuses angeordnet. Der Weg des Schließteils wird von unter dem Gehäuseteil der Fördereinheit befindlichen Bauteilen und während der Montage der Fördereinheit von einer Klammer begrenzt.

Nachteilig bei den Ventilen ist, daß sie aufwendig zu montieren sind und kostenintensiv zu fertigende Bauteile aufweisen. Die als Kappe ausgebildeten Gegenhalter und die zur Begrenzung des Weges des Schließteils erforderliche Klammer sind jeweils sehr komplizierte Bauteile. Deshalb müssen die Bauteile zudem genau in ihren vorgesehenen Ausrichtungen montiert werden. Eine automatische Montage der Ventile ist daher nur schwer möglich.

Der Erfindung liegt das Problem zugrunde, die Ventile der eingangs genannten Art so zu gestalten, daß sie besonders kostengünstig herstellbar und einfach zu montieren sind.

Dieses Problem wird bei dem erstgenannten, insbesondere als Druckbegrenzungsventil gestalteten Ventil dadurch gelöst, daß der Gegenhalter als Kugel mit einem größeren Durchmesser als das Schließteil und die Feder ausgebildet ist.

Durch diese Gestaltung ist der Gegenhalter besonders einfach aufgebaut und läßt sich insbesondere in großen Stückzahlen besonders kostengünstig fertigen. An der Oberfläche des Gegenhalters kann sich eine Feder sehr leicht abstützen. Zentriermittel zur Zentrierung der Feder sind dank der Erfindung nicht erforderlich. Bei der Montage wird zunächst das ebenfalls meist als Kugel ausgebildete Schließteil und anschließend die Feder in das Gehäuse eingesetzt. Der als Kugel ausgebildete Gegenhalter kann im einfachsten Fall automatisch zugeführt und mit dem Gehäuse verbunden werden. Das erfindungsgemäße Ventil läßt sich daher besonders einfach montieren.

Der Gegenhalter ist gemäß einer vorteilhaften Weiterbildung der Erfindung zuverlässig in seiner vorgesehenen Lage gehalten, wenn er in das Gehäuse eingepreßt ist.

Zur weiteren Vereinfachung der Montage des Gegenhalters trägt es gemäß einer anderen vorteilhaften Weiterbildung der Erfindung bei, wenn das Gehäuse Rastmittel zur Halterung des Gegenhalters aufweist.

Der Gegenhalter läßt sich gemäß einer anderen vorteilhaften Weiterbildung der Erfindung einfach mit den Rastmitteln verbinden, wenn die Rastmittel an ihren von dem Gehäuse wegweisenden Enden oder das Gehäuse Einführschrägen für den Gegenhalter aufweisen.

Der Gegenhalter wird gemäß einer anderen vorteilhaften Weiterbildung der Erfindung nach der Montage zuverlässig in seiner vorgesehenen Lage gehalten, wenn dem Gegenhalter zugewandte Bereiche der Rastmittel oder des Gehäuses pfannenförmig gestaltet sind.

Zur Durchströmung mit Kraftstoff beim Öffnen des Ventils kann der als Kugel ausgebildete Gegenhalter beispielsweise von mehreren sternförmig angeordneten Kanälen durchdrungen sein. Zur weiteren Vereinfachung des Aufbaus des Gegenhalters trägt es gemäß einer anderen vorteilhaften Weiterbildung der Erfindung bei, wenn das Gehäuse zwischen dem Schließteil und dem Gegenhalter Öffnungen hat.

Das der Erfindung zugrundeliegende Problem, das zweitgenannte, insbesondere als Entlüftungsventil ausgebildete Ventil der eingangs genannten Art so zu gestalten, daß es besonders kostengünstig herstellbar und einfach montierbar ist, wird erfindungsgemäß dadurch gelöst, daß das Gehäuse Rastmittel zur Hintergreifung des Schließteils aufweist und daß die Rastmittel einen Anlagebereich zur Halterung des Schließteils in seiner von der Feder vorgespannten Lage haben.

Durch diese Gestaltung benötigt das erfindungsgemäße Ventil keine aufwendig zu fertigende und zu montierende Klammer. Das Ventil besteht daher aus besonders wenigen zu montierenden Bauteilen. Bei der Montage des erfindungsgemäßen Ventils läßt sich die Kugel einfach nach dem Einsetzen der Feder in das Gehäuse hinter die Rastmittel drücken. Anschließend ist das Ventil vollständig montiert. An das Gehäuseteil der Fördereinheit angrenzende Bauteile sind daher nicht erforderlich, um den Weg des Schließteils zu begrenzen. Das Gehäuseteil der Fördereinheit und das vollständig montierte erfindungsgemäße Ventil lassen sich zudem kostengünstig als vormontiertes Bauteil gestalten.

Die Rastmittel gestalten sich gemäß einer anderen vorteilhaften Weiterbildung der Erfindung konstruktiv besonders einfach, wenn die Rastmittel hakenförmig gestaltet sind.

Das erfindungsgemäße Ventil gestaltet sich konstruktiv besonders einfach, wenn die Rastmittel an ihrer dem Schließteil zugewandten Seite Führungskanten für das Schließteil aufweisen.

Zur weiteren Verringerung der Anzahl der zu montierenden Bauteile des erfindungsgemäßen Ventils trägt es bei, wenn die Rastmittel einstückig mit dem Gehäuse gefertigt sind. Diese Gestaltung führt bei dem Druckbegrenzungsventil und bei dem Entlüftungsventil zu einer Verringerung der Fertigungskosten.

Der Gegenhalter oder das Schließteil läßt sich gemäß einer anderen vorteilhaften Weiterbildung der Erfindung einfach ich seine vorgesehene Lage bringen, wenn die Rastmittel an ihren von dem Gehäuse wegweisenden Enden oder das Gehäuse Einführschrägen für den Gegenhalter oder das Schließteil aufweisen.

Zur weiteren Vereinfachung der Montage des Gegenhalters oder des Schließteils hinter die Rastmittel trägt es gemäß einer anderen vorteilhaften Weiterbildung der Erfindung bei, wenn mehrere Rastmittel über den Umfang des Schließteils oder des Gegenhalters verteilt angeordnet sind. Weiterhin kann hierbei durch Spalte zwischen den Rastmitteln Kraftstoff oder Luft strömen, so daß Öffnungen in dem Gehäuse nicht erforderlich sind.

Eine Beeinflussung der Bewegung des Schließteils durch umherschwappenden Kraftstoff läßt sich gemäß einer anderen vorteilhaften Weiterbildung der Erfindung einfach vermeiden, wenn zwischen den Rastmitteln mit geringem Abstand zu diesen jeweils Blenden angeordnet sind.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine Schnittdarstellung eines erfindungsgemäßen, als Druckbegrenzungsventil ausgebildeten Ventils,
- Fig.2: eine Schnittdarstellung eines erfindungsgemäßen, als Entlüftungsventil ausgebildeten Ventils.

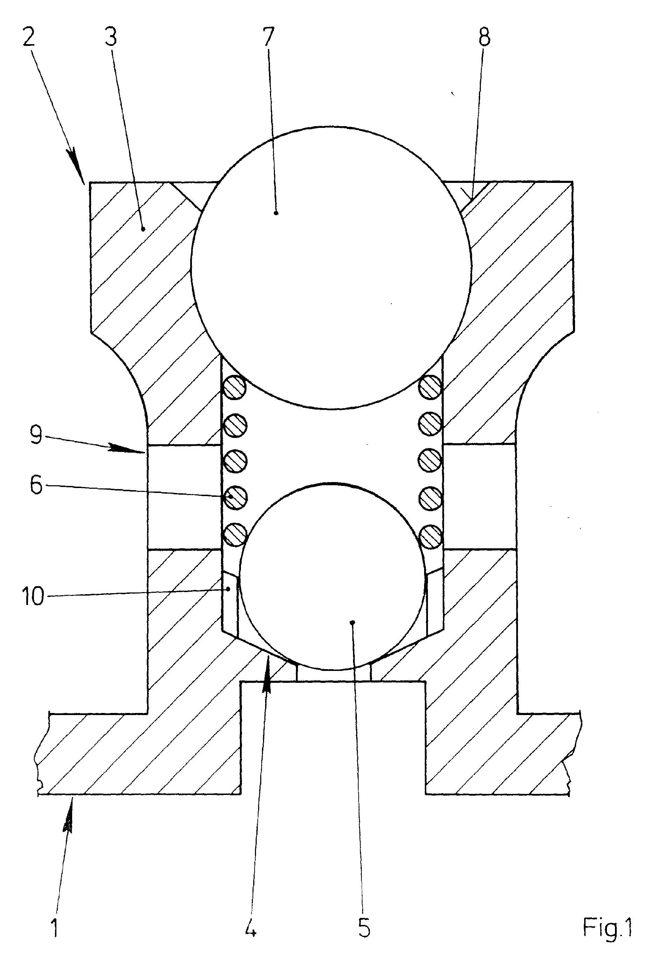

Figur 1 zeigt ein Gehäuseteil 1 einer in einem Kraftstoffbehälter eines Kraftfahrzeuges einsetzbaren Kraftstoffördereinheit mit einem als Druckbegrenzungsventil ausgebildeten Ventil 2. Das Ventil 2 hat ein Gehäuse 3 mit einem gegen einen Ventilsitz 4 vorgespannten Schließteil 5. Innerhalb des Gehäuses 3 ist eine Feder 6 angeordnet. Die Feder 6 stützt sich an einem als Kugel ausgebildeten und in dem Gehäuse 3 eingepreßten Gegenhalter 7 ab. Der Gegenhalter 7 weist einen größeren Durchmesser als die Feder 6 und das Schließteil 5 auf. Bei der Montage des Ventils 2 läßt sich zuerst das Schließteil 5 zusammen mit der Feder 6 in das Gehäuse 3 einsetzen. Anschließend wird der Gegenhalter 7 in das Gehäuse 3 eingepreßt. Zur Vereinfachung des Einpressens weist das Gehäuse 3 an seinem freien Ende eine umlaufende Einführschräge 8 auf. Zwischen dem Gegenhalter 7 und dem Schließteil 5 hat das Gehäuse 3 Öffnungen 9. Weiterhin zeigt Figur 1, daß in dem Gehäuse 3 seitlich Führungsstege 10 zur Führung des Schließteils 5 angeordnet sind. Überschreitet der Druck unterhalb des Schließteils 5 einen vorgesehenen Wert, wird das Schließteil 5 gegen die Kraft der Feder 6 von dem Ventilsitz 4 abgehoben und Kraftstoff kann das Ventil 2 durchströmen. Alternativ zu der dargestellten Ausführungsform kann das Gehäuse 3 im Bereich des Gegenhalters 7 auch mehrere mit geringem Abstand zueinander angeordnete Rastmittel aufweisen. Hierdurch könnte bei geöffnetem Ventil 2 Kraftstoff zwischen den Rastmitteln strömen.

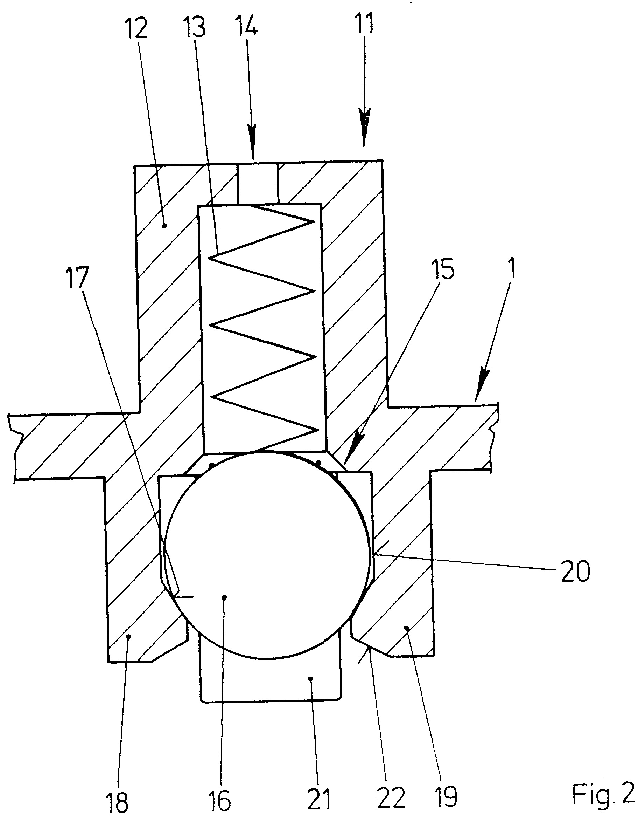

Figur 2 zeigt das Gehäuseteil 1 der Kraftstoffördereinheit aus Figur 1 mit einem als Entlüftungsventil ausgebildeten Ventil 11. Das Ventil 11 hat ein Gehäuse 12 mit einer darin angeordneten Feder 13. Das Gehäuse 12 ist topfförmig gestaltet und weist an einem Ende eine Entlüftungsöffnung 14 und an seinem anderen Ende einen Ventilsitz 15 auf. Die Feder 13 spannt ein Schließteil 16 von dem Ventilsitz 15 weg gegen einen Anlagebereich 17. Der Anlagebereich 17 ist auf das Schließteil 16 hintergreifenden Rastmitteln 18, 19 angeordnet. Die Rastmittel 18, 19 weisen in ihren dem Schließteil 16 gegenüberstehenden Bereichen Führungskanten 20 auf. Weiterhin zeigt Figur 2, daß zwischen den Rastmitteln 18, 19 Blenden 21 angeordnet sind. In der eingezeichneten Offenstellung kann Luft zwischen den Blenden 21 und den Rastmitteln 18, 19 an dem Schließteil 16 vorbei durch die Entlüftungsöffnung 14 in dem Gehäuse 12 strömen. Wenn ein Füllstand an Kraftstoff das Schließteil 16 erreicht, wird dieses gegen den Ventilsitz 15 gedrückt und schließt das Ventil 11. Hierfür hat das Schließteil 16 eine geringere Dichte als der Kraftstoff. Zur Montage des Ventils 11 wird zunächst die Feder 13 in das Gehäuse 12 eingesetzt und anschließend das Schließteil 16 hinter die Rastmittel 18, 19 gedrückt. Zur Vereinfachung der Montage des Schließteils 16 weisen die Rastmittel 18, 19 Einführschrägen 22 auf.

## Patentansprüche

1. Ventil, insbesondere Druckbegrenzungsventil für eine Kraftstoffördereinheit mit einem Gehäuse, mit einem in dem Gehäuse angeordneten, gegen einen Ventilsitz bewegbaren Schließteil und mit einer sich an einem mit dem Gehäuse verbundenen Gegenhalter abstützenden Feder zur Vorspannung des Schließteils, **dadurch gekennzeichnet, daß** der Gegenhalter (7) als Kugel mit einem größeren Durchmesser das Schließteil (5) und die Feder (6) ausgebildet ist.

2. Ventil nach Anspruch 1, **dadurch gekennzeichnet, daß** der Gegenhalter (7) in das Gehäuse (3) eingepreßt ist.

3. Ventil nach Anspruch 1 oder 2, **dadurch gekennzeichnet, daß** das Gehäuse (3) Rastmittel zur Halterung des Gegenhalters (7) aufweist.

4. Ventil nach zumindest einem der vorhergehenden Ansprüche, **dadurch gekennzeichnet, daß** die dem Gegenhalter (7) zugewandten Bereiche der Rastmittel oder des Gehäuses (3) pfannenförmig gestaltet sind.

5. Ventil nach zumindest einem der vorhergehenden Ansprüche, **dadurch gekennzeichnet, daß** das Gehäuse (3) zwischen dem Schließteil (5) und dem Gegenhalter (7) Öffnungen (9) hat.

6. Ventil, insbesondere Entlüftungsventil für eine Kraftstoffördereinheit mit einem Gehäuse, mit einem gegen einen Ventilsitz bewegbaren Schließteil und mit einer Feder zur Vorspannung des Schließteils, wobei die Feder kleinere Abmessungen hat als das Schließteil, **dadurch gekennzeichnet, daß** das Gehäuse (12) Rastmittel (18, 19) zur Hintergreifung des Schließteils (16) aufweist und daß die Rastmittel (18, 19) einen Anlagebereich (17) zur Halterung des Schließteils (16) in seiner von der Feder (13) vorgespannten Lage haben.

7. Ventil nach Anspruch 6, **dadurch gekennzeichnet, daß** die Rastmittel (18, 19) hakenförmig gestaltet sind.

8. Ventil nach Anspruch 6 oder 7, **dadurch gekennzeichnet, daß** die Rastmittel (18, 19) an ihrer dem Schließteil (16) zugewandten Seite Führungskanten (20) für das Schließteil (16) aufweisen.

9. Ventil nach zumindest einem der vorhergehenden Ansprüche, **dadurch gekennzeichnet, daß** die Rastmittel (18, 19) einstückig mit dem Gehäuse (12, 3) gefertigt sind.

10. Ventil nach zumindest einem der vorhergehenden Ansprüche, **dadurch gekennzeichnet, daß** die Rastmittel (18, 19) an ihren von dem Gehäuse (12) wegweisenden Enden oder das Gehäuse (3) Einführschrägen (8, 22) für den Gegenhalter (7) oder das Schließteil (16) aufweisen.

11. Ventil nach zumindest einem der vorhergehenden Ansprüche, **dadurch gekennzeichnet, daß** mehrere Rastmittel (18, 19) über den Umfang des Schließteils (16) oder des Gegenhalters (7) verteilt angeordnet sind.

12. Ventil nach zumindest einem der vorhergehenden Ansprüche, **dadurch gekennzeichnet, daß** zwischen den Rastmitteln (18, 19) mit geringem Abstand zu diesen jeweils Blenden (21) angeordnet sind.
